# EUROPEAN PATENT SPECIFICATION

(11) **EP 0 992 969 B1**
(45) Date of publication and mention of the grant of the patent: **18.02.2009**
(21) Application number: 99910839.2
(22) Date of filing: 02.04.1999
(51) Int. Cl.: G09G 1/00, G09G 3/20

(54) **DISPLAY DEVICE**
ANZEIGEVORRICHTUNG
DISPOSITIF D'AFFICHAGE

(30) Priority: 28.04.1998 JP 11764298
(43) Date of publication of application: 12.04.2000
(73) Proprietor: NIPPON SEIKI CO., LTD., Nagaoka-shi, Niigata 940-8580 (JP)
(72) Inventor: UCHIYAMA, Tadahiro, Nagaoka-shi, Niigata 940-2141 (JP); HARA, Shigehiko, Nagaoka-shi, Niigata 940-2141 (JP)
(74) Representative: Jackson, Richard Eric
(86) International application number: PCT/JP1999/001774
(87) International publication number: WO 1999/056273

(56) References cited:
- GB-A- 2 322 219
- JP-A- 6 051 736
- JP-A- 8 272 343
- JP-A- 8 286 652
- JP-A- 9 146 073
- JP-A- 10 187 096
- JP-A- 11 067 464
- US-A- 5 406 305
- US-A- 5 617 112

## Description

This invention relates to a display apparatus capable of adjusting the brightness of a light-emitting type display device.

### BACKGROUND OF THE INVENTION

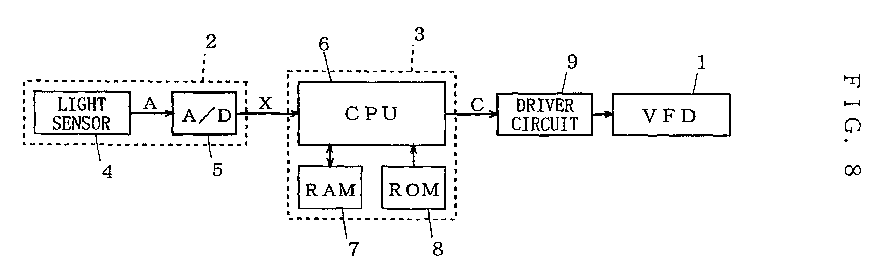

Display apparatus which adjust the brightness of a light-emitting type display device like a VFD (Vacuum Fluorescent Display) according to ambient illuminance have conventionally been available (see FIG. 8). The brightness of a VFD 1 is adjusted by a microcomputer 3 based on adjustment data X output from an illuminance detecting means 2. The illuminance detecting means 2 is formed of an light sensor 4 and an analog-to-digital (A/D) converter 5 wherein the A/D converter 5 converts an illuminance signal A output from the light sensor 4 into the adjustment data X.

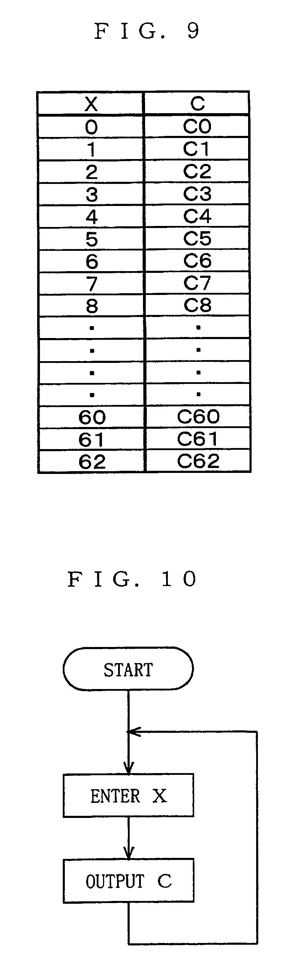

Comprising a central processing unit (CPU) 6, a random-access memory (RAM) 7 and a read-only memory (ROM) 8, the microcomputer 3 outputs brightness data C to a driver circuit 9 to adjust the brightness of the VFD 1. The ROM 8 has a look-up table, in which the brightness data C corresponding to the adjustment data X is stored (see FIG. 9), and the microcomputer 3 outputs the brightness data C based on the adjustment data X entered from the illuminance detecting means 2.

The aforementioned display apparatus has an advantage that it can automatically adjust the brightness of the VFD 1 according to ambient illuminance. When the surrounding area has become darker, for instance, the display apparatus automatically reduces the brightness of the VFD 1 so that it is possible to keep a viewer from being dazzled. It has been likely, however, that the display apparatus causes flicker (a phenomenon in which the brightness of the VFD 1 varies at frequent intervals) when the ambient illuminance varies frequently. Specifically, since the microcomputer 3 carries out processing cycles from input of the adjustment data X to output of the brightness data C at specified intervals (e.g., 0.01 second) as shown in FIG. 10, the brightness of the VFD 1 would vary at the same intervals according to the ambient illuminance. Thus, there has been a problem that the viewer is embarrassed by such brightness variations. The invention has been made in view of the aforementioned problem and, therefore, it is an object of the invention to provide a display apparatus which can reduce flicker.

JP 06-051736 discloses an apparatus for controlling the brightness of a head-up display device.

JP 09-146073 discloses a driving circuit for a backlight arrangement of a display device in which the luminance of the backlight is adjusted based on optical sensors and on a value manually input by an operator.

### DISCLOSURE OF THE INVENTION

The present invention provides a display apparatus comprising:
a light-emitting type display device;
an illuminance detecting means which detects ambient illuminance and outputs first adjustment data (X) according to the ambient illuminance; and
a control means which calculates second adjustment data (x), and adjusts the brightness of said display device according to brightness data (C) obtained based on the calculated second adjustment data (x);
wherein said control means has a memory for storing a previous value of the second adjustment data (x') and calculates the second adjustment data (x) depending on whether said previous value is larger or smaller than the first adjustment data (X); and characterised in that:
said second adjustment data (x) is only calculated when the first adjustment data (X) is not equal to the previous value of the second adjustment data (x') and a time interval (t) has exceeded a set time (T); and
said control means increases or decreases the brightness of said display device in specific steps determined by a value obtained by equally dividing the difference between the brightness data (C) obtained based on the calculated second adjustment data (x) and a previous value of the brightness data (C').

The control means may have a second memory 35 for temporarily storing the previous value x' of the second adjustment data x. The control means 30 may calculate the second adjustment data x by adding a specified value to the previous value x' when the first adjustment data X is larger than the previous value x' and by subtracting the specified value from the previous value x' when the first adjustment data X is smaller than the previous value x'.

The display apparatus may be made such that third adjustment data Y is entered from a manual adjusting means 31 and the brightness data C is output based on the second adjustment data x and the third adjustment data Y. This will make it possible to adjust the brightness of the light-emitting type display device 15 according to the preference of an operator..

### BRIEF DESCRIPTION OF THE DRAWINGS

FIG. 1 is a block diagram showing an embodiment of the invention;
FIG. 2 is an explanatory diagram showing a virtual image created in the embodiment of the invention;
FIG. 3 is a cross-sectional diagram showing a display unit according to the embodiment of the invention;
FIG. 4 is an explanatory chart showing first adjustment data of the embodiment of the invention;
FIG. 5 is an explanatory chart showing third adjustment data of the embodiment of the invention;
FIG. 6 is an explanatory chart showing brightness data of the embodiment of the invention;
FIG. 7 is a flowchart showing the embodiment of the invention;
FIG. 8 is a block diagram showing a prior art example;
FIG. 9 is an explanatory chart showing brightness data of the prior art example; and
FIG. 10 is a flowchart showing the prior art example.

### BEST MODE FOR CARRYING OUT THE INVENTION

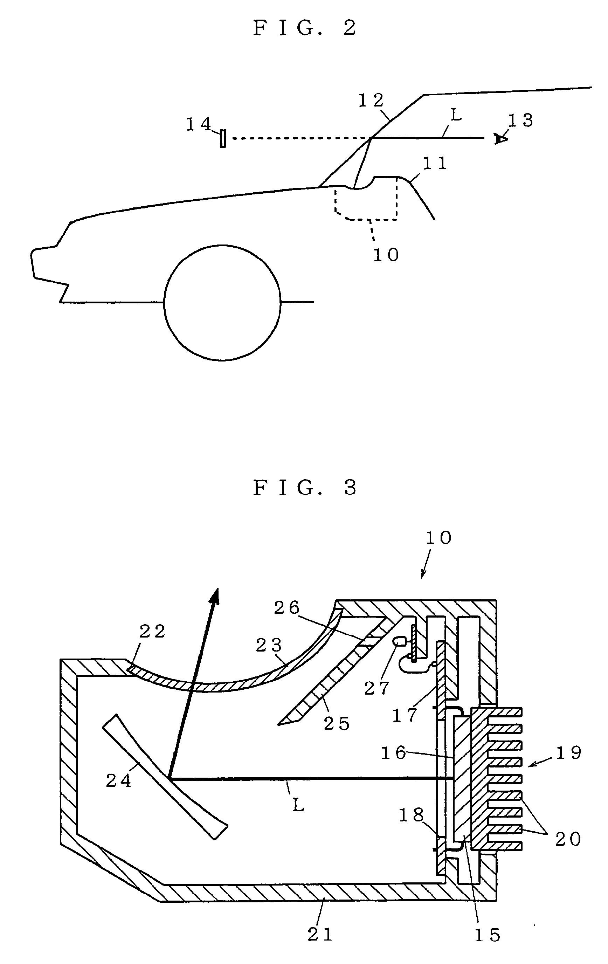

An embodiment in which the present invention is applied to a head-up display for a vehicle is described below. Designated by the numeral 10 is a display unit which is located inside a dashboard 11 of the vehicle (see FIG. 2). Display light L projected by the display unit 10 is reflected by a windshield 12 toward a viewer 13. The viewer 13 can observe a virtual image 14 which is superimposed upon an outer scene.

FIG. 3 is a cross-sectional view of the display unit 10. Designated by the numeral 15 is a VFD (light-emitting type display device). The VFD 15 has a display surface 16 and emits the display light L. Designated by the numeral 17 is a circuit board which is connected to the VFD 15. A later-described microcomputer is mounted on the circuit board 17. The circuit board 17 has an aperture 18 at a location corresponding to the display surface 16. Designated by the numeral 19 is a radiator element having a number of radiating fins 20. The radiator element 19 is bonded to a rear surface of the VFD 15 with a silicone-based adhesive.

Designated by the numeral 21 is a housing in which the VFD 15, the circuit board 17, etc. are incorporated. There is made an aperture 22 for emitting the display light L in the housing 21, and a transparent cover 23 made of a light-transmitting resin (e.g., acrylic) is fitted in the aperture 22. Designated by the numeral 24 is a reflecting mirror which reflects the display light L in the direction toward the aperture 22. The numeral 25 indicates a light-blocking wall which is one-piece formed with the housing 21 and prevents the virtual image 14 from being obscured (washed out) due to extraneous light, such as sunlight, incident upon the VFD 15. There is provided a through hole 26 in the light-blocking wall 25 that is formed at a position corresponding to a later-described light sensor. The numeral 27 indicates the light sensor which senses the light penetrated the transparent cover 23 and passed through the through hole 26. This light sensor 27 is located behind the light-blocking wall 25 and is connected to the circuit board 17.

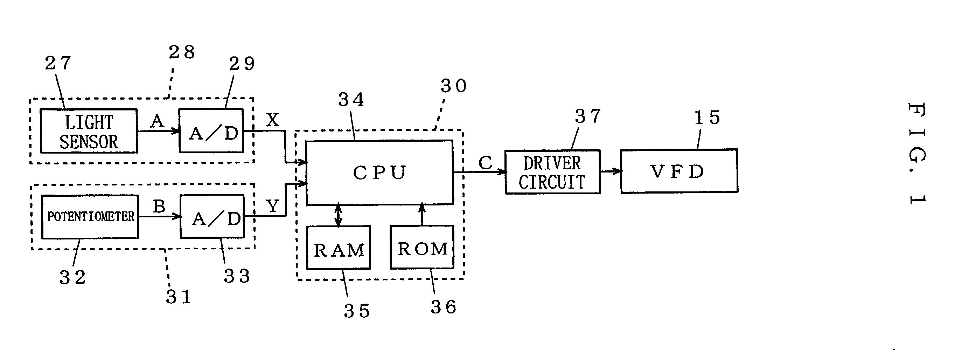

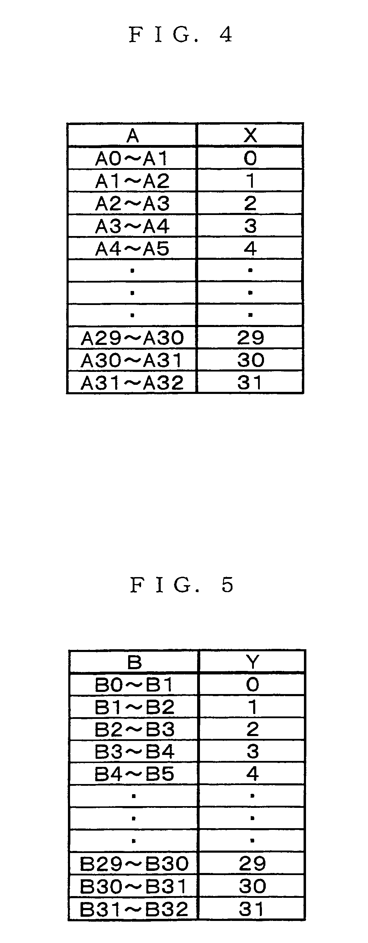

Next, adjustment of the brightness of the VFD 15 is described based on a block diagram shown in FIG. 1. Designated by the numeral 28 is an illuminance detecting means which is formed of the light sensor 27 and an A/D converter 29. The A/D converter 29 converts an illuminance signal A output from the light sensor 27 into adjustment data X (first adjustment data) and outputs this adjustment data X to a microcomputer 30. The adjustment data X is an integer and corresponds to the level of the illuminance signal A (see FIG. 4).

Designated by the numeral 31 is a manual adjusting means which is formed of a potentiometer 32 and an A/D converter 33. The A/D converter 33 converts an adjustment signal B output from the potentiometer 32 into adjustment data Y (third adjustment data) and outputs this adjustment data Y to the microcomputer 30. The adjustment data Y is an integer and corresponds to the level of the adjustment signal B (see FIG. 5).

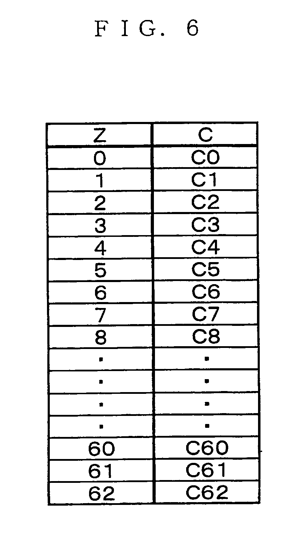

The microcomputer 30 comprises a CPU 34, RAM 35 (memory) and a ROM 36, wherein the ROM 36 stores brightness data C corresponding to adjustment data Z (see FIG. 6). As will be described later, the adjustment data Z is data calculated based on adjustment data x (second adjustment data) and the adjustment data Y. The microcomputer 30 outputs the brightness data C to a driver circuit 37 to adjust the brightness of the VFD 15.

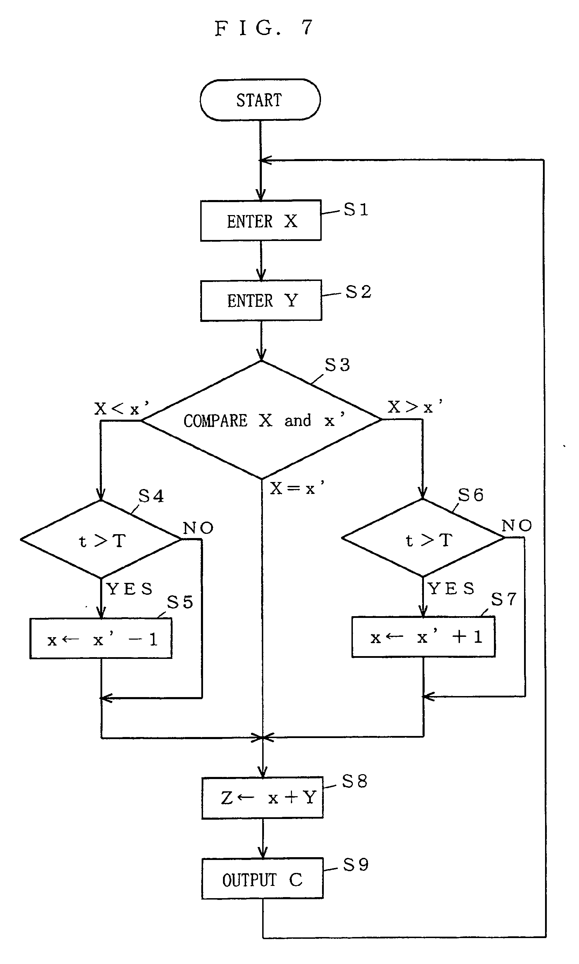

Now, calculation of the adjustment data Z is described below in detail referring to a flowchart shown in FIG. 7. First, the adjustment data X is entered in step S1 and, then, the adjustment data Y is entered in step S2.

Next, the adjustment data X is compared with a previous value x' of the adjustment data x in step S3, wherein the previous value x' is read out from the RAM 35. If the adjustment data X is smaller than the previous value x', the operation flow proceeds to step S4. Contrarily, if the adjustment data X is larger than the previous value x', the operation flow proceeds to step S6. If the adjustment data X is equal to the previous value x', the operation flow proceeds to step S8.

If time data t has not exceeded a set time T (e.g., 0.3 second) in step S4, the operation flow proceeds to step S8. If the time data t has exceeded the set time T in step S4, the operation flow proceeds to step S5. In step S5, "1" is subtracted from the previous value x' to calculate the adjustment data x and, then, the operation flow proceeds to step S8.

If the time data t has not exceeded the set time T in step S6, the operation flow proceeds to step S8. If, however, the time data t has exceeded the set time T in step S6, the operation flow proceeds to step S7. In step S7, "1" is added to the previous value x' to calculate the adjustment data x and the operation flow proceeds to step S8.

When step S5 or S7 has finished, the adjustment data x is temporarily stored in the RAM 35 and the time data t is reset.

In step S8, the adjustment data x and the adjustment data Y are added together to thereby calculate the adjustment data Z. Next, the brightness data C is output in step S9. When step S9 has finished, the operation flow returns to step S1 and, then, operations from step S1 to step S9 are repeated at a specified cycle time (e.g., 0.01 second).

According to the above-described embodiment, "1" is added to or subtracted from the previous value x' to calculate the adjustment data x depending on whether the adjustment data X is larger or smaller than the previous value x' only when the time data t has exceeded the set time T in steps S3, S4 and S5 (or steps S3, S6 and S7). Thus, the adjustment data x varies by only "1" for every set time T even when the adjustment data X varies at frequent intervals. Accordingly, the adjustment data x does not vary frequently even when the ambient illuminance varies frequently and, therefore, flicker of the VFD 15 is reduced. Furthermore, since the adjustment data Y is added to the adjustment data x at the specified cycle time in step S8, response characteristics of the brightness data C with respect to operation of the potentiometer 32 are not impaired.

A previous value C' of the brightness data C is stored in the RAM and the brightness is increased or decreased in specific steps determined by a value obtained by equally dividing the difference between the brightness data C and its previous value C'. This approach makes it possible to gradually vary the brightness of a light-emitting type display device.

Furthermore, although the embodiment is constructed such that the value "1" is subtracted from the previous value x' (or added to the previous value x') in step S5 (or step S7), it may be modified such that the previous value x' is multiplied (or divided) by "0.9" and a resultant product (or quotient) is converted into an integral number to thereby calculate the adjustment data x.
Although the manual adjusting means 31 is not necessarily required, it, if provided as in the present embodiment, makes it possible to adjust the brightness of the VFD 15 according to the preference of an operator. Moreover, although the light-emitting type display device is the VFD 15 in this embodiment, it may be a backlit liquid crystal display or an electroluminescent display, for example.

### INDUSTRIAL APPLICABILITY

The present invention is applicable to a display apparatus which adjusts the brightness of a light-emitting type display device according to ambient illuminance and, more particularly, it is suited for a head-up display for a vehicle.

## Claims

1. A display apparatus comprising:
a light-emitting type display device (15);
an illuminance detecting means (28) arranged to detect ambient illuminance and output first adjustment data (X) according to the ambient illuminance; and
a control means (30) arranged to calculate second adjustment data (x), and to adjust the brightness of said display device (15) according to brightness data (C) obtained based on the calculated second adjustment data (x);
wherein said control means (30) has a memory (35) for storing a previous value of the second adjustment data (x') and is arranged to calculate the second adjustment data (x) depending on whether said previous value (x') is larger or smaller than the first adjustment data (X); and **characterised in that**:
said control means is arranged such that said second adjustment data (x) is only calculated when the first adjustment data (X) is not equal to the previous value of the second adjustment data (x') and a time interval (t) has exceeded a set time (T); and
said control means (30) is arranged to increase or decrease the brightness of said display device (15) in specific steps determined by a value obtained by equally dividing the difference between the brightness data (C) obtained based on the calculated second adjustment data (x) and a previous value of the brightness data (C').

2. The display apparatus of claim 1 wherein said control means is arranged to calculate the second adjustment data by adding a specified value to or subtracting the same from said previous value.

3. The display apparatus as defined in claim 1 or 2 further comprising a manual adjusting means (31) which is arranged to output third adjustment data (Y), wherein said control means (30) is arranged to adjust the brightness of said display device (15) according to the brightness data (C) obtained based on fourth adjustment data (Z) calculated by adding the second adjustment data (x) and the third adjustment data (Y).

## Patentansprüche

1. Anzeigevorrichtung mit:
einer lichtemittierenden Anzeigeeinrichtung (15);
einer Einrichtung (28) zum Erfassen einer Beleuchtungsstärke, die zum Erfassen einer Umgebungsbeleuchtungsstärke und zum Ausgeben erster Anpassungsdaten (X) in Übereinstimmung mit der Umgebungsbeleuchtungsstärke eingerichtet ist; und
einer Steuereinrichtung (30), die zum Berechnen zweiter Anpassungsdaten (x) und zum Anpassen der Helligkeit der Anzeigeeinrichtung (15) in Übereinstimmung mit Helligkeitsdaten (C) eingerichtet ist, die basierend auf den berechneten zweiten Anpassungsdaten (x) erhalten werden;
wobei die Steuereinrichtung (30) einen Speicher (35) zum Speichern eines vorherigen Werts der zweiten Anpassungsdaten (x') aufweist und zum Berechnen der zweiten Anpassungsdaten (x) in Abhängigkeit davon eingerichtet ist, ob der vorherige Wert (x') größer oder kleiner als die ersten Anpassungsdaten (X) ist; und **dadurch gekennzeichnet ist, dass**:
die Steuereinrichtung derart eingerichtet ist, dass die zweiten Anpassungsdaten (x) lediglich berechnet werden, wenn die ersten Anpassungsdaten (X) nicht gleich dem vorherigen Wert der zweiten Anpassungsdaten (x') sind und ein Zeitintervall (t) eine Stellzeit (T) überschritten hat; und
dass die Steuereinrichtung (30) eingerichtet ist, die Helligkeit der Anzeigeeinrichtung (15) in spezifischen Schritten zu erhöhen oder zu verringern, die durch einen Wert bestimmt sind, der durch gleiches Teilen der Differenz zwischen den Helligkeitsdaten (C) erhalten wird, die basierend auf den berechneten zweiten Anpassungsdaten (x) und dem vorherigen Wert der Helligkeitsdaten (C') erhalten werden.

2. Anzeigevorrichtung nach Anspruch 1, wobei die Steuereinrichtung eingerichtet ist, die zweiten Anpassungsdaten durch Addieren eines bestimmten Werts zu dem vorherigen Wert oder durch Subtrahieren desselben von dem vorherigen Wert zu berechnen.

3. Anzeigevorrichtung nach Anspruch 1 oder 2, die des Weiteren eine manuelle Anpassungseinrichtung (31) aufweist, die zum Ausgeben dritter Anpassungsdaten (Y) eingerichtet ist, wobei die Steuereinrichtung (30) zum Anpassen der Helligkeit der Anzeigeeinrichtung (50) in Übereinstimmung mit den Helligkeitsdaten (C) eingerichtet ist, die basierend auf vierten Anpassungsdaten (Z) erhalten werden, die durch Addieren der zweiten Anpassungsdaten (x) und der dritten Anpassungsdaten (Y) berechnet werden.

## Revendications

1. Appareil d'affichage comprenant :
■ un dispositif d'affichage du type électroluminescent (15) ;
■ des moyens de détection d'éclairement (28) agencés pour détecter l'éclairement ambiant et délivrer des premières données d'ajustement (X) conformément à l'éclairement ambiant ; et
■ des moyens de commande (30) agencés pour calculer des deuxièmes données d'ajustement (x) et pour ajuster la luminosité dudit dispositif d'affichage (15) conformément à des données de luminosité (C) obtenues sur la base des deuxièmes données d'ajustement (x) calculées ;
dans lequel lesdits moyens de commande (30) comportent une mémoire (35) pour mémoriser une valeur précédente (x') des deuxièmes données d'ajustement et sont agencés pour calculer les deuxièmes données d'ajustement (x) selon que ladite valeur précédente (x') est supérieure ou inférieure aux premières données d'ajustement (X) ; et **caractérisé en ce que** :
lesdits moyens de commande sont agencés de sorte que lesdites deuxièmes données d'ajustement (x) ne soient calculées que lorsque les premières données d'ajustement (X) ne sont pas égales à la valeur précédente (x') des deuxièmes données d'ajustement et qu'un intervalle de temps (t) a dépassé un temps fixé (T) ; et
lesdits moyens de commande (30) sont agencés pour augmenter ou diminuer la luminosité dudit dispositif d'affichage (15) par pas spécifiques déterminés par une valeur obtenue en divisant de manière égale la différence entre les données de luminosité (C) obtenues sur la base des deuxièmes données d'ajustement (x) calculées et une valeur précédente des données de luminosité (C').

2. Appareil d'affichage selon la revendication 1, dans lequel lesdits moyens de commande sont agencés pour calculer les deuxièmes données d'ajustement en ajoutant, à ladite valeur précédente, une valeur spécifiée ou en soustrayant la susdite de ladite valeur précédente.

3. Appareil d'affichage selon la revendication 1 ou 2, comprenant en outre des moyens d'ajustement manuel (31) qui sont agencés pour délivrer des troisièmes données d'ajustement (Y), dans lequel lesdits moyens de commande (30) sont agencés pour ajuster la luminosité dudit dispositif d'affichage (15) conformément aux données de luminosité (C) obtenues sur la base de quatrièmes données d'ajustement (Z) calculées en additionnant les deuxièmes données d'ajustement (x) et les troisièmes données d'ajustement (Y).
